# EUROPEAN PATENT APPLICATION

(11) **EP 1 906 148 A2**
(43) Date of publication of application: **02.04.2008**
(21) Application number: 07018081.5
(22) Date of filing: 14.09.2007
(51) Int. Cl.: G01C 21/32

(54) **Data update system, navigation apparatus, and data update method**

(30) Priority: 29.09.2006 JP 2006269311
(71) Applicant: Aisin AW Co., Ltd., Fujii-cho Anjo-shi, Aichi 444-1192 (JP)
(72) Inventor: Takahata, Seiji, Okazaki-shi Aichi 444-8564 (JP); Shibata, Tomofumi, Okazaki-shi Aichi 444-8564 (JP)
(74) Representative: Kramer - Barske - Schmidtchen

(57) **Abstract**

A navigation apparatus being operated on the basis of a predetermined operation program (PG) includes a local storage database updated with a difference data file, regarding a plurality of grouped data stored in the updated local storage database, includes a priority determination means for determining a conversion priority according to an operation state of an operation program (PG) and a conversion means for converting data in a local storage database to a referential data format in the order of a conversion priority; and server apparatus includes a means for outputting a difference data file to the navigation apparatus.

## Description

### 1. Related Technical Fields

Related technical fields include a data update system including a navigation apparatus which performs an operation on the basis of a predetermined operation program and a server apparatus which provides a difference data file for updating a database to the navigation apparatus, the navigation apparatus, and a data update method being used for the data update system.

### 2. Description of the Related Art

Heretofore, a technology of a data update system has been well-known in which a server apparatus transmits difference data to a terminal apparatus such as a navigation apparatus and the terminal apparatus that has received the difference data performs an update of the data on the basis of an existing information and the difference information. For example, Japanese Unexamined Patent Application Publication No.2006-84257 discloses the technology described above.

A data update system described in Japanese Unexamined Patent Application Publication No.2006-84257 is an information delivery system comprising a center apparatus for providing information and a terminal apparatus for receiving information from the center apparatus, for example. The center apparatus comprises a difference information extracting unit for extracting a difference between information that has been previously transmitted to the terminal device and information to be transmitted, and a transmission unit for transmitting the difference information extracted through the difference information extracting unit to the terminal apparatus. In addition, the terminal apparatus comprises a receiving unit for receiving the difference information from the center apparatus and a display unit for displaying the difference information received through the receiving unit in addition to the existing information.

Note that the difference information described here is information relating to traffic information such as traffic congestion or a restriction, for example, and corresponding to a difference between the traffic information previously generated and a latest traffic information. The terminal apparatus that has received the foregoing difference information then displays on the display unit both the existing traffic information already received/stored in a storage unit and the difference information newly received. Consequently, it becomes possible to frequently update the traffic information for displaying on the terminal apparatus and also to minimize the volume of the information to be transmitted from the center apparatus to the terminal apparatus for updating.

The data update system described above is a system for updating data with relatively less volume of information such as traffic information. Accordingly, if the difference data is generated at the side of the server apparatus (the center apparatus) and transmitted to the navigation apparatus (the terminal apparatus) as described above, the data may be updated relatively easily e.g., by rewriting existing data to the difference data at the side of the navigation apparatus. Further, due to less volume of information and the data may be updated within relatively short period of time; therefore, the new information updated based on the difference data may be provided to a user in short time after receiving the difference data (the difference information) for updating.

However, in the case of updating a database wherein the data size is tremendous and complicatedly related each other such as a map database including road network data to be used in a navigation apparatus, it is not easy to update the database on the basis of the difference data being received. In other words, for such complicated data, modifying a piece of data will be associated with a number of data needed to be modified, therefore the volume of data included in the difference data will also increase accordingly. In addition, in order to update a database on the basis of the aforementioned difference data, non-updated data corresponding to a large volume of data included in the difference data needs to be extracted from a database with a tremendous volume of data. For example, in the case of updating a database storing a road network data, each of data is arrayed in the order of the connection of the road network, so each of the data included in the difference data may not be extracted with ease. Therefore, the processing of updating in the terminal apparatus is very complicated and takes too much time. Thus, in the case of updating a complicated database such as a map database being used in the navigation apparatus, generally all of the data has been rewritten and updated, instead of updating the difference. However, with such a method, the volume of the necessary data for updating is too much to transmit to a terminal apparatus through a communication network or the like. Accordingly, the frequent update of data is not feasible, and unfortunately it has been very difficult to provide up-to-date data to a terminal apparatus continuously.

On the other hand, if a navigation apparatus has a structure with a database specifically for the difference update in order to easily perform a differential update of a map database, for example, the process of the differential update of the database may be relatively easy. However, even with the foregoing structure, on the basis of the database for the differential update, when updating a referential database to be operated by an operation program, the volume of data for the update is too much and it takes long time to update all the data. Therefore, it still requires relatively a lot of time from updating the database for the differential update to update the referential database to finally provide the new information based upon the updated database to a user.

In view of the above problems, an object of the present invention is to provide a data update system, a terminal apparatus to be used in the data update system, a server apparatus, and a data update method capable of an easy performance of a differential update of a database in which the volume of data is much and each of the data is complicatedly related such as a map database including a road network data and, after performing the difference update, providing new information based upon the updated database to a user within relatively a short period of time.

### SUMMARY

To achieve the aforementioned object, an embodiment of the present invention includes a data update system with a navigation apparatus being operated on the basis of a predetermined operation program and a server apparatus providing a difference data file for updating a database to the navigation apparatus. The data update system has a characteristic feature wherein the navigation apparatus is constructed in an update data format which is different from a referential data format to be referred by the operation program, and comprising
a local storage database being updated on the basis of the difference data file,
a priority determination means for, after updating the local storage database, determining a conversion priority on a plurality of grouped data stored in the local storage database according to the operation state of the operation program,
a conversion means for converting the data stored in the local storage database to the referential data format in the order of the conversion priority, and
a difference data file output means wherein the server apparatus outputs the difference data file for providing to the navigation apparatus.

According to suchlike characteristic feature, the navigation apparatus includes the local storage database constructed in the update data format that is suitable for the update by the difference data file, and this local storage database is updated on the basis of the difference data file. Therefore, the differential update may be performed relatively easily even for the database in which the volume of data is much and each of the data is complicatedly related. Accordingly, the data may be updated more frequently on the basis of the difference data file easily, and up-to-date data may be provided to the navigation apparatus continuously. In addition, the data in the local storage database is used after being converted by the conversion means to the referential data format to be referable by the operation program, therefore, by changing the format of the local storage database to the update data format, the influence to an operation of the operation program may be controlled. Further, after updating the local storage database, the data in the local storage database is converted to the referential data format in the order of the conversion priority; therefore, the data with higher conversion priority is converted to the referential data format on ahead than the other data to become referable by the operation program. Thus, the proper determination of the conversion priority according to the state of an operation of the operation program enables to provide the updated information such as information of a set guidance route or a peripheral guidance of a current position that a user may need within a short period of time after performing the differential update of the local storage database.

In case a guidance route is set on the basis of the operation program, it may be preferred that the priority determination means sets the conversion priority on the data corresponding to the guidance route higher than the other data.

Therefore, in the case that a guidance route is set on the basis of the operation program, the data corresponding to the guidance route is converted to the referential data format ahead than the other data to become referable by the operation program. Accordingly, regarding the necessary information for guiding the set guidance route when a guidance route is set in the navigation apparatus, the updated information may be provided within relatively a short period of time after performing the differential update of the local storage database.

In case a guidance route is not set on the basis of the operation program, it may be preferred that the priority determination means sets the conversion priority on the data corresponding to a peripheral guidance of a current position higher than the other data.

Therefore, in the case that a guidance route is not set on the basis of the operation program, the data corresponding to a peripheral guidance of a current position is converted to the referential data format ahead than the other data to become referable by the operation program. Accordingly, regarding the necessary information for the peripheral guidance of the current position when a guidance route is not set in the navigation apparatus, the updated information may be provided within relatively a short period of time after performing the differential update of the local storage database.

It may be preferred that the navigation apparatus is structured including the referential database for storing the data in the referential data format to be referred by the operation program and a referential database update means for updating the referential database on the basis of the data converted by the conversion means.

In the aforementioned structure, the operation program may perform an operation basically by referring to the referential database which stores the data in the referential data format. Accordingly, the processing load required for the conversion by the conversion means may be reduced comparing to the case that all the data to be referred by the operation program is converted by the conversion means each time of referring. Further, the content of the referential database may be updated to match the content of the local storage database to be updated by the difference data file.

It may be preferred that, if the data has higher conversion priority than a predetermined level, the referential database update means updates the referential database preferentially after converted by the conversion means, and if the data has lower priority than the predetermined level, the referential database update means updates the referential database in parallel with the guidance operation on the basis of the operation program. Note that the "guidance operation" in the embodiment of the present invention includes all the operations regarding the guidance function of the navigation apparatus such as a display of a current position, a route calculation from a departing point to a destination point, course guidance to a destination, a search for a destination, and so forth.

In the aforementioned structure, as for the data with the higher conversion priority than a predetermined level, the referential database is updated preferentially. Thus, when setting the conversion priority on the data corresponding to the information the user may need such as the set guidance route or the peripheral guidance of the current position higher than the predetermined level, for example, the updated information about such information may be reflected to the referential database within relatively a short period of time after performing the differential update of the local storage database and provide it to the user. On the other hand, as for the data with lower conversion priority, without disturbing the guidance operation on the basis of the operation program, the referential database is updated in parallel with the guidance operation. Finally, the content of all the data updated on the basis of the difference data file will eventually be reflected to the referential database.

It may be preferred to have a structure wherein the data stored in the local storage database includes the road network data, the referential data format is the data format for arraying each of the data regarding the road network data in the order of the connection of each of the data, and the update data format is the data format for arraying each of the data regarding the road network data in the order of the data category.

In the aforementioned structure, the data format of the local storage database may be the format which is suitable for the update on the basis of the difference data file, and the converted data by the conversion means may be in the format which is suitable for the reference on the basis of the operation program in the navigation apparatus. Thus, the differential update of the road network data whose data volume is much and each of whose data is complicatedly related may be performed relatively easily, while the influence to the operation of the operation program may be controlled so as to ensure the operation of the navigation apparatus is properly performed.

It may be preferred that the difference data file includes the data representing an update mode and the road network data corresponding to the target part for update, and the road network data corresponding to the target part for update may be structured in the data format in which data is arrayed in the order of the data category.

In the aforementioned structure, substantive data being as the target of the update is sorted on the basis of the update mode further in the data format in which data is arrayed in the order of the data category same as the update data format of the local storage database; therefore, the processing of the differential update of the local storage database may be performed relatively easily on the basis of the difference data file.

It may be preferred that the data stored in the local storage database includes the road network data and a route pre-calculation data as a result of a pre-calculation of plural combined routes between a departing area and a destination area, and the difference data file includes the data representing the update mode, the road network data corresponding to the target part for update, and the pre-calculation data corresponding to the target part for update. Note that the embodiment of the present invention does not limit the "area" of the "departing area" and the "destination area" as the area having a certain expanse, but also includes one point or a group of two points or more.

In the aforementioned structure, the differential update of the local storage database may also be performed regarding the route pre-calculation data as the result of the pre-calculation of the plural combined routes between the departing area and the destination area, as well as the road network data.

It may be preferred that, in case that a guidance route is set on the basis of the operation program, regarding the route pre-calculation data, the priority determination means set the conversion priority on the data corresponding to the guidance route connecting the departing area and the destination area higher than other data.

In the aforementioned structure, in the case that the navigation apparatus includes the route pre-calculation data and also a guidance route is already set on the basis of the operation program, the route pre-calculation data corresponding to the guidance route is converted to the referential data format on ahead than the other route pre-calculation data to be referable by the operation program. Accordingly, the route pre-calculation data required when a guidance route is already set in the navigation apparatus may become available within relatively a short period of time after performing the differential update of the local storage database.

It may be preferred that the server apparatus includes a comparative local storage database which carries the same content as the local storage database, a new data accepting means for accepting an input of new data, and a difference data file generation means for generating the difference data file on the basis of the comparative local storage database and the new data.

In the aforementioned structure, the server apparatus may generate the difference data file easily based on the inputted new data on the basis of the content of the local storage database in the navigation apparatus.

It may be preferred that the server apparatus further includes a new local storage database generation means for, on the basis of the comparative local storage database and the new data, generating the new local storage database updated with the content of the new data in the same data format as the comparative local storage database. It may be also preferred that the difference data file generation means generates the difference data file on the basis of the difference between the comparative local storage database and the new local storage database.

In the aforementioned structure, the difference data file is generated on the basis of the database of before/after the update in the same data format as the local storage database in the navigation apparatus; therefore, the difference data file may be generated relatively easily in the format that is suitable for the update of the local storage database.

The embodiment of the present invention includes the navigation apparatus which accepts the difference data file from the server apparatus for updating the database while performing the operation on the basis of the predetermined operation program. The navigation apparatus has the characteristic feature of including the local storage database constructed in the update data format which is different from the referential data format to be referred by the operation program, the local storage database updated on the basis of the difference data file, the priority determination means for, after updating the local storage database, determining the conversion priority on the plurality of grouped data stored in the local storage database according to the state of the operation of the operation program, and the conversion means for converting the data stored in the local storage database to the referential data format in the order of the conversion priority.

According to suchlike characteristic feature, the navigation apparatus includes the local storage database constructed in the update data format which is suitable to update with the difference data file and the local storage database is updated with the difference data file; therefore, even on the database whose volume is much and each of the whose data is complicatedly related, the differential update may be performed relatively easily. Thus, the frequent data-update may become easy with the difference data file and the up-to-date data may be continuously provided to the navigation apparatus. In addition, the data in the local storage database is used after converted by the conversion means to the referential data format which is referable by the operation program; therefore, the influence to the operation of the operation program in case the local storage database has the update format may be controlled. Further, after updating the local storage database, the data in the local storage database is converted to the referential data format in the order of the conversion priority; therefore, the data with higher conversion priority is converted to the referential data format on ahead than the other data to be referable by the operation program. Thus, the proper determination of the conversion priority according to the state of the operation of the operation program enables to provide the updated information such as the information of the set guidance route or the peripheral guidance of a current position that a user may need within a short period of time after performing the differential update of the local storage database.

Further, it may be preferred to add each of the structures regarding the navigation apparatus above. Note that the advantage in such case is as described above.

The embodiment of the present invention includes a data update method for providing the difference data file from the server apparatus to the navigation apparatus to update the database. The data update method has a characteristic feature wherein, with the server apparatus and the navigation apparatus including the local storage database constructed in the update data format which is different from the referential data format to be referred by the predetermined operation program, the server apparatus outputs the difference data file for providing to the navigation apparatus, and the navigation apparatus accepts the difference data file, updates the local storage database with the difference data file, after updating the local storage database, determines the conversion priority on a plurality of the grouped data stored in the local storage database according to the state of the operation of the operation program, converts the data stored in the local storage database to the referential data format in the order of the conversion priority, and makes the converted data referable by the operation program.

According to the characteristic feature above, the navigation apparatus updates the local storage database with the difference data file and the local storage database is constructed in the update data format which is suitable for updating by the difference data file; therefore, even on the database whose data volume is much and each of whose data is complicatedly related, the differential update may be performed relatively easily. Thus, the frequent data-update may become easy with the difference data file and the up-to-date data may be continuously provided to the navigation apparatus. In addition, the data in the local storage database is converted to the referential data format to be referable by the operation program; therefore, the influence to the operation of the operation program in case the local storage database has the update format may be controlled. Further, after updating the local storage database, the data in the local storage database is converted to the referential data format in the order of the conversion priority; therefore, the data with higher conversion priority is converted to the referential data format on ahead than the other data to be referable by the operation program. Thus, the proper determination of the conversion priority according to the state of the operation of the operation program enables to provide the updated information such as the information of the set guidance route or the peripheral guidance of the current position that the user may need within a short period of time after performing the differential update of the local storage database.

It may be preferred, in the case a guidance route is set on the basis of the operation program, to set the conversion priority on the data corresponding to the guidance route higher than the other data.

In the aforementioned structure, in the case a guidance route is set on the basis of the operation program, the data corresponding to the guidance route may be converted to the referential data format on ahead than the other data to be referable by the operation program. Accordingly, as for the necessary information used for guiding the set guidance route in the case the guidance route is set in the navigation apparatus, the updated information may be provided within relatively a short period of time after performing the differential update of the local storage database.

It may be preferred, in the case a guidance route is not set on the basis of the operation program, to set the conversion priority on the data corresponding to a peripheral guidance of a current position higher than the other data.

In the aforementioned structure, in the case that a guidance route is not set on the basis of the operation program, the data corresponding to the peripheral guidance of the current position is converted to the referential data format on ahead than the other data to be referable by the operation program. Accordingly, as for the necessary information required for the peripheral guidance of the current position in the case the guidance route is not set in the navigation apparatus, the updated information may be provided within relatively a short period of time after performing the differential update of the local storage database.

It may be also preferred that the navigation apparatus includes the referential database that stores the data in the referential data format to be referred by the operation program and updates the referential database with the data which was converted to the referential data format.

In the aforementioned structure, the operation program may perform an operation by referring to the referential database that stores the data in the referential data format basically. Accordingly, the processing load required for the conversion by the conversion means may be reduced comparing to the case that all the data referred by the operation program is converted by the conversion means each time of referring. Further, the content of the referential database may be updated to match the content of the local storage database being updated by the difference data file.

It may be preferred that, when the data has higher conversion priority than a predetermined level, the referential database is updated preferentially after converted to the referential data format, and when the data has lower priority than the predetermined level, the referential database is updated in parallel with the guidance operation on the basis of the operation program.

In the aforementioned structure, regarding the data with the higher conversion priority than a predetermined level, the referential database is updated preferentially. Thus, when setting the conversion priority on the data corresponding to the information the user may need such as the information of the set guidance route or the peripheral guidance of the current position higher than the predetermined level, the updated information as above may be reflected to the referential database within relatively a short period of time after performing the differential update of the local storage database and will be provided it to the user. On the other hand, regarding the data with lower conversion priority than the predetermined level, without disturbing the guidance operation on the basis of the operation program, the referential database is updated in parallel with the guidance operation. Finally, the content of all the data that was updated on the basis of the difference data file will be reflected to the referential database eventually.

The data stored in the local storage database includes the road network data and the route pre-calculation data as a result of the pre-calculation of plural combined routes between the departing area and the destination area. As for the route pre-calculation data, it may be referred, when a guidance route is set on the basis of the operation program, to set the conversion priority on the data corresponding to the guidance route connecting the departing area and the destination area higher than the other data.

In the aforementioned structure, in the case that the navigation apparatus includes the route pre-calculation data and also a guidance route is already set on the basis of the operation program, the route pre-calculation data corresponding to the guidance route is converted to the referential data format on ahead than the other route pre-calculation data to be referable by the operation program. Accordingly, the route pre-calculation data being required when a guidance route is already set in the navigation apparatus may become available within relatively a short period of time after performing the differential update of the local storage database.

It may be preferred that the server apparatus includes the comparative local storage database which carries the same content as the local storage database, accepts the input of new data, and generates the difference data file on the basis of the comparative local storage database and the new data.

In the aforementioned structure, the server apparatus may generate the difference data file easily based on the inputted new data, on the basis of the content of the local storage database in the navigation apparatus.

It may be preferred that the server apparatus, on the basis of the comparative local storage database and the new data, generates the new local storage database which has been updated with the content of the new data in the same data format as the comparative local storage database, and generates the difference data file on the basis of the difference between the comparative local storage database and the new local storage database.

In the aforementioned structure, the difference data file is generated on the basis of the database of before/after the update in the same data format as the local storage database in the navigation apparatus; therefore, the difference data file which format is suitable to update the local storage database may be generated relatively easily.

### BRIEF DESCRIPTION OF THE DRAWINGS

Exemplary implementations will now be described with reference to the accompanying drawings, wherein:

FIG. 1 is a block diagram showing an exemplary data update system in accordance with an embodiment of the present invention.

FIG.2 is a diagram showing an exemplary navigation program.

FIG.3 is a diagram showing an exemplary referential database.

FIG.4 is a diagram showing an exemplary relationship of one section of road network data between different layers.

FIG.5 is a diagram showing an exemplary road network.

FIG.6 is a diagram showing an exemplary road network data in a referential data format.

FIG.7 illustrates an exemplary processing of route calculation.

FIG.8 is a diagram showing an exemplary route pre-calculation data.

FIG.9 is a diagram showing an exemplary difference data file.

FIG.10 is a diagram showing an exemplary road network data in an update data format.

FIG.11 is a diagram showing an exemplary route pre-calculation data in an update format.

FIG.12 is a diagram showing an exemplary comparative table of a record code and a permanent ID of each data.

FIG.13 is a flowchart showing an exemplary method of generating a difference data file.

FIG.14 is a flowchart showing an exemplary method of providing a difference data file to a navigation apparatus.

FIG.15 is a flowchart showing an exemplary method of updating a referential database in a navigation apparatus.

### DETAILED DESCRIPTION OF EXEMPLARY IMPLEMENTATIONS

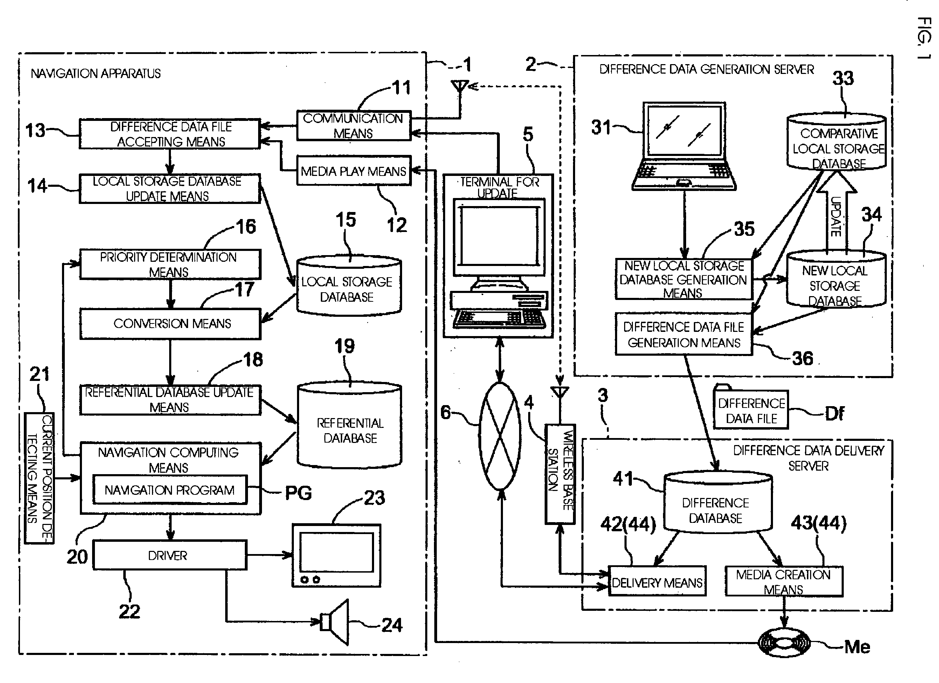

The embodiment of the present invention will be described in further detail below with reference to figures. FIG. 1 is a block diagram showing an exemplary update system according to the present embodiment. The data update system according to the present embodiment is a system for providing a difference data file Df generated by means of a difference data generation server 2 from a difference data delivery server 3 to a navigation apparatus 1 and for updating a referential database 19 serving as a navigation map database. Therefore, a data update system according to the present embodiment is mainly made up of the navigation apparatus 1, the difference data generation server 2 and the difference data delivery server 3. A server according to an embodiment of the present invention is herein comprised of the difference data generation server 2 and the difference data delivery server 3.

In the navigation apparatus 1, the difference generation server 2 and the difference data delivery server 3 includes a functional unit for performing various processing on inputted data using a computing processing apparatus such as CPU serving as a core member in a hardware or a software (a program). Each of the databases in the navigation apparatus 1, difference data generation server 2, and the difference data delivery server 3 includes a rewritable memory medium such as a hard disk drive or a flash memory, for example, and an apparatus for its driving means. Note that "DB" in each of figures in the present embodiment denotes "database". A structure of each apparatus will be described hereinafter.

1. A structure for executing a guidance function of the navigation apparatus 1. The navigation apparatus 1 includes a navigation computing means 20, the referential database 19, a current position detecting means 21, a driver 22, a display operation unit 23, and an audio output unit 24 for executing the basic guidance functions in the navigation apparatus such as a display of a current position, a route calculation from a departing point to a destination point, a course guidance to a destination, a search for a destination and so forth.

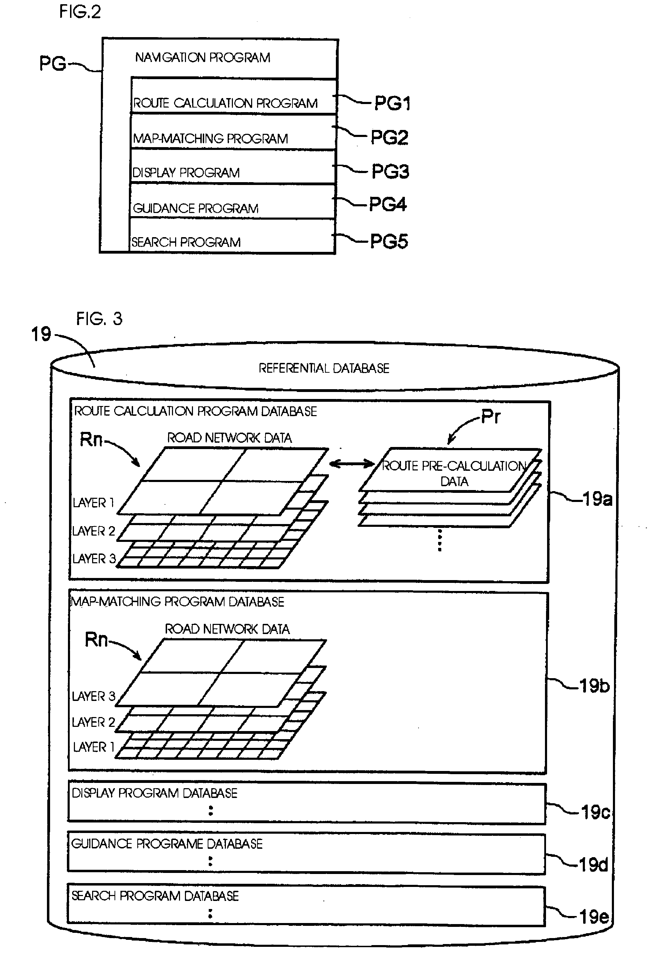

The navigation computing means 20 is a computing processing means for being operated on the basis of a navigation program PG serving as an operation program. FIG.2 is a diagram illustrating a structure of the navigation program PG. As shown in the figure, the navigation program PG includes a plurality of application programs PG1, PG2, PG3, PG4 and PG5. In the present embodiment, the navigation program PG includes five application programs of a route calculation program PG1, a map-matching program PG2, a display program PG3, a guidance program PG4, and a search program PG5. The route calculation program PG1 is a program for performing the route calculation for searching for a route from a departing point such as a current position to a destination point that have been inputted through the display operation unit 23. The map-matching program PG2 is a program for performing the map-matching processing for matching a current position detected by the current position detecting means 21 onto a road on a map. The display program PG3 is a program for displaying a map around a current position or a destination point or displaying the current position on the map of the display screen in the display operation unit 23. The guidance program PG4 is a program for performing a proper processing of the route guidance to a user with the guidance display on the display screen with the display operation unit 23 or voice guidance through the audio output unit 24 on the basis of the route to the destination determined by the route calculation program PG1. The search program PG5 is a program for searching for a destination or any point for displaying a map on the basis of an address, a phone number, a facility name, or a genre. Note that the outline of the route calculation processing by the route calculation program PG1 will be described hereinafter. Each of the operation processing of the navigation apparatus 1 on the basis of the other application programs PG2, PG3, PG4 and PG5 is well known, so any detail explanation will not be given. In each application program PG1, PG2, PG3, PG4, and PG5, the data (information) stored in the referential database 19 such as road network data Rn and route pre-calculation data Pr may be used.

The referential database 19 is a database which stores data in a referential data format to be referred by the navigation program PG in order to execute the above-described basic guidance functions in the navigation apparatus 1, and stores navigation map data such as the road network data Rn and the route pre-calculation data Pr. In the present embodiment, the referential database 19 serves as a navigation map database including the road network data Rn and the route pre-calculation data Pr. In addition, the referential database 19 includes a plurality of databases for each functional application program in accordance with a plurality of application programs included in the navigation program PG. FIG.3 is a diagram showing an exemplary referential database 19. As shown in the figure, each data of the road network data Rn and the route pre-calculation data Pr in the referential database 19 is stored corresponding to each application program PG1, PG2, PG3, PG4, and PG5, and each is working as an application program database 19a, 19b, 19c, 19d or 19e. That is to say, in the present embodiment, the referential database 19 stores a route calculation program database 19a, a map-matching program database 19b, a display program database 19c, a guidance program database 19d, and a search program database 19e.

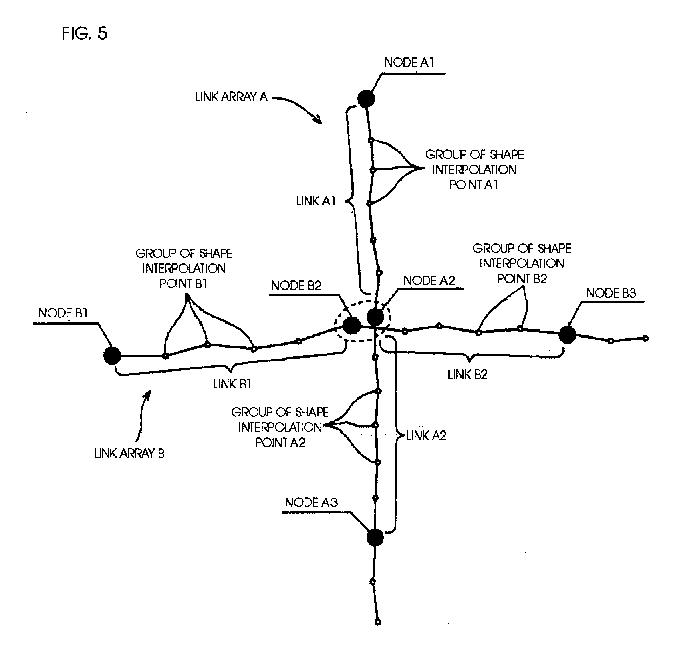

Though partially omitted in FIG.3, at least the road network data Rn is stored in the referential data format corresponding to the each application program PG1, PG2, PG3, PG4 and PG5 in the each application program database 19a, 19b, 19c, 10d, and 19e. In addition, the route calculation program database 19a stores the route pre-calculation data Pr correlating to the road network data Rn. The content of the route pre-calculation data Pr will be described hereinafter. Further, each of the application databases 19a, 19b, 19c, 19d, and 19e stores various data (guidance data) for a display, guidance, a search and so forth being used in each of the application program PG1, PG2, PG3, PG4, or PG5 besides the road network data Rn and the route pre-calculation data Pr (Not illustrated). Each of such data includes, for example, image data, audio data, or POI (Point of Interest) data, and each of the data is stored in association with data corresponding to links or nodes included in the road network data Rn. (See FIG.5)

As shown in FIG.3 in the present embodiment, the road network data Rn in each application database 19a, 19b, 19c, 19e, and 19e in the referential database 19 is divided by a plurality of layers (hierarchy) according to how much detail of the road information is stored. In the present embodiment, the road network data Rn has three layers, layer 1, layer 2, and layer 3, from the lower level to the upper level. The lower level includes more detail road information. In particular, regarding the road category stored as road information, each layer stores the information of the road category as follows. That is to say, for example, the layer 1 stores the information of a) a highway and a toll way, b) a national road, c) a prefectural road, d) a principal regional road, and e) a general local road. The layer 2 excludes e) a general local road and stores the information of a) a highway and a toll way, b) a national road, c) a prefectural road, and d) a principal regional road. The layer 3 further excludes c) a prefectural road and d) a principal regional road and stores the information of a) a highway and a toll way and b) a national road.

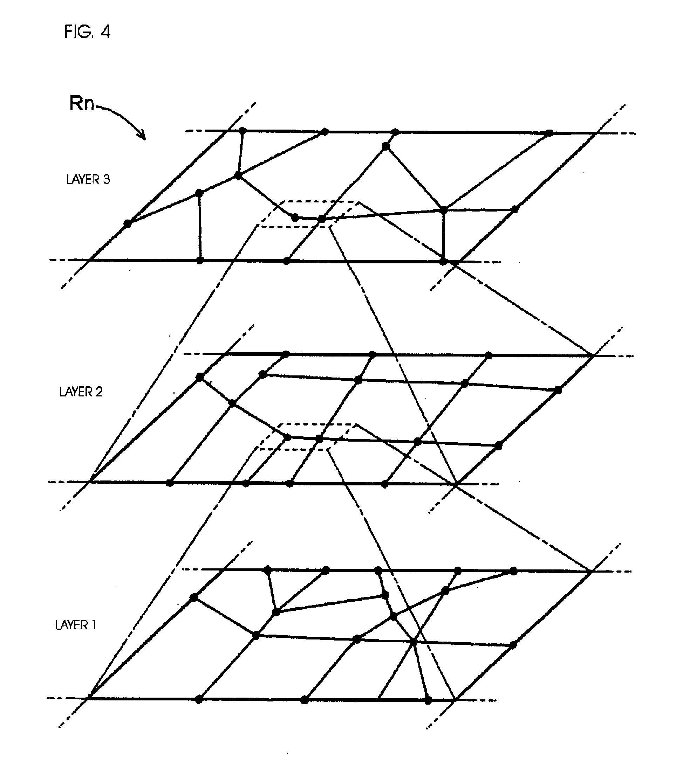

As shown in FIG.3, each layer is divided into a plurality of sections. The upper layer includes the sections corresponding a wider region. FIG.4 is a diagram showing the relationship of one section in the road network data Rn between the different layers. As shown in this figure, one section in the upper layer includes a region corresponding to a plurality of sections in the lower layers. And as shown in FIG.3, the road network data Rn stored in each application program database 19a, 19b, 19c, 19d, and 19e is a group of road network data Rn of a plurality of sections dividing each layer. Each section on the each layer is assigned with a different section ID and the section ID enables to specify certain road network data Rn of what section on which layer. Hereinafter, the word "section" refers to each of the plurality of sections dividing the each layer.

FIG.5 is a diagram showing an exemplary road network represented by the road network data Rn corresponding to each of the sections. In the example shown in this figure, the two link arrays with a link array A and a link array B includes nodes A1, A2, and A3 and B1, B2, and B3 (black filled circles in FIG.5), links A1, A2, B1, and B2 connecting two nodes (solid lines in FIG.5), and a group of shape interpolation points specifying a shape of each of the links A1, A2, B1, and B2 (open circles in FIG.5). The road network data Rn is the data which represents the information of each of these link arrays. Note that, although the node A2 in the link array A and the node B2 in the link array B are presented at different locations in FIG.5, they are the nodes indicating the same intersection. In the road network data Rn, the data corresponding to each of the nodes is managed by each link array A and B, therefore, both link array A and B has the data corresponding to the node indicating the same intersection. Note that, in such case as above, the data also has the information of a data array of the other node indicating the same intersection.

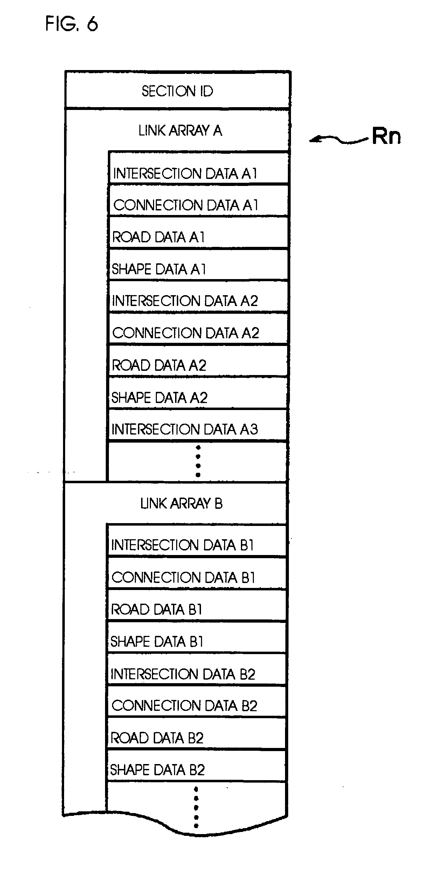

FIG6 is a diagram showing an exemplary structure of the road network data Rn in the referential data format which represents the road network shown in FIG.5. As shown in this figure, the referential data format is a data format wherein each data is arrayed in the order of the connection of the road network. In the present embodiment, as described above, each of the sections in each layer is assigned with a different section ID, and a section ID indicating the correspondent section is placed at the top in the road network data Rn of each of the sections. In addition, the road network data Rn includes an intersection data, a connection data, a road data, and a shape data as the substantive data that constructs the road network data Rn. The intersection data includes the information regarding a coordinate of a node indicating an intersection, the information regarding an attribute of the intersection indicating the existence or nonexistence of a traffic signal or a traffic sign, and the information regarding a hierarchy indicating up to which layer among the plurality of layers (layer 1 to layer 3) the intersection (node) is included. The connection data includes regarding what road (link) is connected to the node indicating the intersection, and the information regarding the necessity of the guidance or existence or nonexistence of any regulation based on the traveling direction at the intersection, and so forth. The road data includes the information of a node located at the edge of the link representing the road, the information of the road category, the information of roadway width, the information of the number of traffic lane, the information of hierarchy indicating up to which layer among a plurality of layers (layer 1 to layer 3) the road (link) is included, and so forth. The shape data includes the information of coordinate of a group of the shape interpolation points specifying the shape of the link indicating the road, and so forth. As for the information of the hierarchy of the intersection data and the road data in the present embodiment, the data corresponding to the intersection (node) and the road (link) regarding a) a highway and a toll way and b) a national road is included in all the layers 1 to 3, the data corresponding to the intersection (node) and the road (link) regarding c) a prefectual road and d) a principle regional road is included in the layer 1 and the layer 2, and the data corresponding to the intersection (node) and the road (link) regarding e) a general local road is included only in the layer 1. Note that each of the intersection data, the connection data, the road data, and shape data is the data representing the same kind of content as the intersection data, the connection data, road data, and shape data which is related to the road network data Rn in the update data format stored in the local storage database 15 or the road network data Rn included in the difference data file Df. However, each of the specific contents or arrays has certain level of difference. For example, the content of road extension data or intersection extension data in the road network data Rn in the update data format are not separated as a independent category in the road network data Rn stored in the referential database 19, in stead, included in any one of the following data which is the intersection data, the connection data, the road data, and the shape data on the relevant data basis.

Each of such data is arrayed in the order of the connection of the road network, more specifically, each of the data is arrayed in the order of the connection of the nodes and the links included in each link array on the basis of each link array. For example, regarding the data corresponding to the link array A shown in FIG.5, the intersection data A1 and the connection data A1 corresponding to the node A1 locates on the top followed by the road data A1 corresponding to the link A1 which is connected to the node A1, and the shape data A2 corresponding to the group of the shape interpolation points on the link A1 as shown in FIG.6. Next, the intersection data A2 and the connection data A2 corresponding to the node A2 which is connected to the other side of the link A1 is arrayed followed by the road data A2 corresponding to the link A2 which is connected to the node A2, and the shape data A2 corresponding to the group of the shape interpolation points on the link A2. In addition, regarding the other link arrays such as the link array B, the same arrangement is made for the data array. Note that the specific content of each data included in the road network data Rn, is different according to in which application program database 19a to 19e the data is stored, however, the way of arraying the data as shown in FIG.6 is the same in any application program database 19a to 19e.

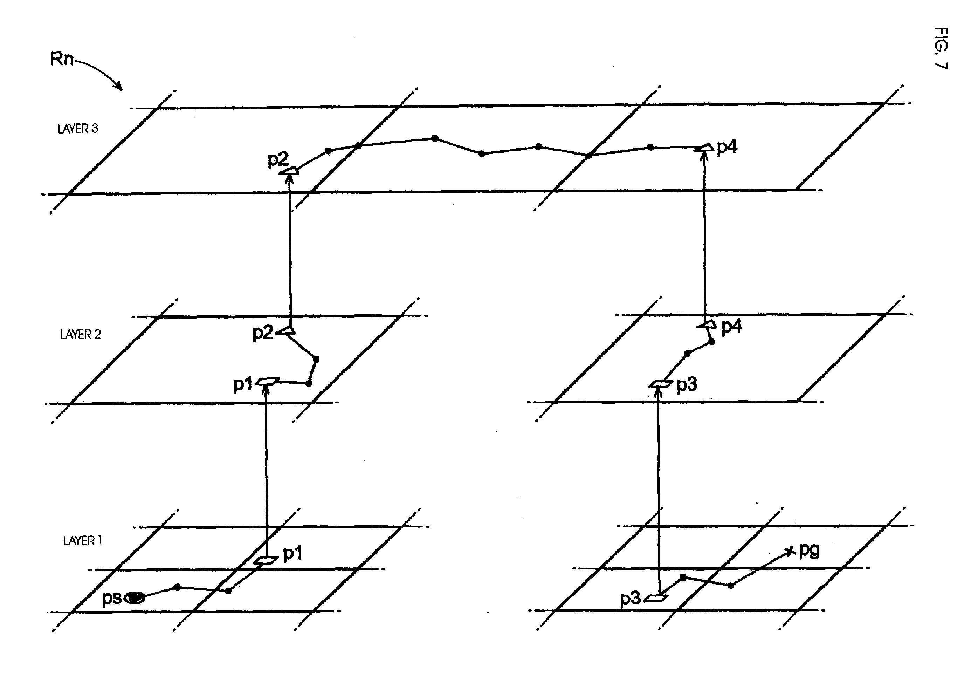

The navigation computing means 20 performs a route calculation from a departing point to a destination point with the above-described road network data Rn on the basis of the route calculation program PG1. FIG.7 is a diagram illustrating an overview of the processing of the route calculation on the basis of the route calculation program PG1. This figure shows an exemplary processing of the route calculation from the departing point ps shown at the lower left of the figure to the destination point pg. As shown in this figure, the processing of the route calculation, on the basis of the road network data Rn corresponding to the layer 1 which includes the detail road information, searches for a route to a common intersection (node) p1 which is also included in the road network data Rn in the layer 2 around the departing point ps. Next, a route to a common intersection (node) p2 which is also included in the layer 3 is searched for on the basis of the road network data Rn corresponding to the layer 2. On the other hand, around the destination point pg, on the basis of the road network data Rn corresponding to the layer 1 which includes the detail road information, searches for a route to a common intersection (node) p3 which is also included in the road network data Rn in the layer 2. Next, on the basis of the road network data Rn in the layer 2, a route to a common intersection (node) p4 which is also included in the layer 3 is searched. Then, on the basis of the road network data Rn in the layer 3, a route connecting an intersection (node) p2 and p5 is searched with a) a highway and a toll way, b) a national road, and so forth as a search target. The processing of a route calculation is performed from a departing point ps to a destination point pg as described above.

The route pre-calculation data Pr is the data as the result of the pre-calculation of plural combined routes between a departing area and a destination area on the basis of the route calculation program PG1. In the present embodiment, the "area" of the departing area or the destination area is based on the unit of the "section" in the road network data Rn in the layer 2. That is to say, the section in the layer 2 which includes the departing point ps (see FIG.7) represents the departing area, and the section in the layer 2 which includes the destination point pg (see FIG.7) represents the destination area. Subsequently, the route pre-calculation data Pr is the data as the result of the pre-calculation of the route connecting two nonadjacent sections in the layer 2 on the basis of the road network data Rn in the layer 3.

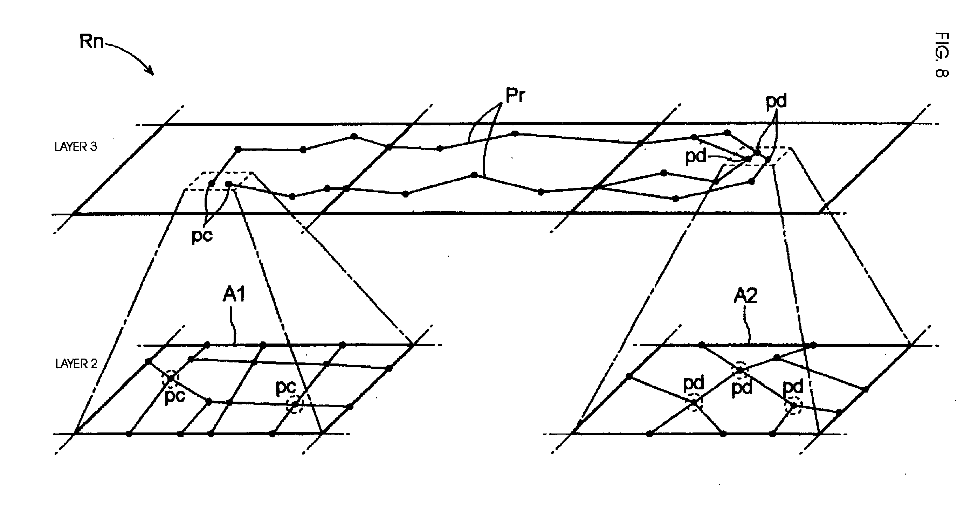

FIG.8 is a diagram showing an exemplary route pre-calculation data Pr. As shown in this figure, the route pre-calculation data Pr between a section A1 and a section A2 in the layer 2 as a departing area and a destination area may be a plurality of routes as a result of the search for the route connecting a common intersection (node) pc which is also included in the layer 3 for the section A1 and a common intersection (node) pd which is also included in the layer 3 for the section A2 on the basis of the road network data Rn. In the example shown in FIG.8, the section A1 includes two common intersections (nodes) pc also included in the layer 3, and the section A2 includes three common intersections (nodes) pd also included in the layer 3, and six routes may be calculated as the route pre-calculation data Pr accordingly. Note that occasionally the route as above may be partially or fully overlapped with the other route. As described above, the route pre-calculation data Pr may be the data presenting the order of the connection of the nodes and the links included in the road network data Rn in the layer 3(See FIG.5).

The route pre-calculation data Pr is calculated in the same way for all the combination of the sections in the layer 2. An arrangement is made wherein the result of the route calculation between one section in the layer 2 and all the other sections that are nonadjacent to the section in the layer 2 become the route pre-calculation data Pr regarding the said one section. For example, the route pre-calculation data Pr regarding the section A1 in FIG.8 is a group of the route pre-calculation data Pr between the section A1 and all the other sections that are nonadjacent to the section A1 in the layer 2. Subsequently, the route pre-calculation data Pr for all the sections in the layer 2 will be stored in the route calculation program database 19a in the referential database (see FIG.3) on a section basis. In the route calculation program database 19a, the route pre-calculation data Pr is stored in the referential data format associated with the road network data Rn so as to be read easily when performing a route calculation on the basis of the route calculation program PG1.

With the foregoing route pre-calculation data Pr, the navigation computing means 20 is able to omit the computing processing of the route calculation from the departing point ps to the destination pg which is supposed to be performed with the road network data Rn in the layer 3. That is to say, as shown in FIG.7, the route from the departing point ps to the intersection (node) p2 is searched while the route from the destination point pg to the intersection (node) p4 is searched, then the navigation computing means 20 extracts the route pre-calculation data Pr regarding the route which connects the intersection (node) p2 and p4 from the referential database 19. This will enable to omit the processing of search for the route which connects the intersection (node) p2 and p4, and may accordingly shorten the time and decrease the computing load for the processing of the route calculation.

The current position detecting means 21 detects a current position in the navigation apparatus 1. Therefore, the current position detecting means 21 includes, for example, a GPS receiver, a direction sensor, a distance sensor and so forth (not illustrated). On the basis of the information as above, the current position detecting means 21 obtains the information of e.g., a coordinate or a traveling direction indicating a current position, and outputs it to the navigation computing means 20. The display operation unit 23 includes a display screen such as a LCD display apparatus or the like and a touch panel or an operation bottom operating the display screen, and so forth. The audio output unit 24 includes a speaker, an amplifier and so forth. Each of the display operation unit 23 and the audio output unit 24 is connected to the navigation computing means 20 through the driver 22 and operates a display or a voice output for a current position display, a route calculation between two points, a course guidance, a destination search and so forth. In addition, the display operation unit 23 accepts an operation inputted from a user and outputs the content to the navigation computing means 20.

2. A structure for delivering an update function of the navigation apparatus 1. In addition to the basic guidance functions described above, the navigation apparatus 1 includes a communication means 11, a media play means 12, a difference data file accepting means 13, a local storage database update means 14, a local storage database 15, a priority determination means 16, a conversion means 17, and a referential database update means 18 for delivering the update function of the referential database 19. The navigation apparatus 1 performs a differential update for the local storage database 15 based on the difference data file Df provided by the difference data delivery server 3 and then updates the referential database 19 by converting the data in the updated local storage database 15 to the referential data format. Each of these structures will be described in detail below.

The difference data file accepting means 13 accepts the difference data file Df provided by the difference data delivery server 3. In the present embodiment, the difference data file Df is accepted through the communication means 11 or the media play means 12. The communication means 11 is able to receive the difference data file Df via radio transmission through a wireless base station. As suchlike wireless communication method, a mobile phone network, a wireless LAN (Local Area Network), or any other well-known communication network may be used. In addition, the communication means 11 is able to communicate with a terminal for update 5 carried by a user or a service provider of the navigation apparatus 1 and is able for the terminal for update 5 to receive the difference data file Df transmitted through a communication network 6 such as an Internet. The terminal for update 5 may be a personal computer and so forth, and various well-known wired or wireless communication methods may be used as a communication method between the communication means 11 and the terminal for update 5. The media play means 12 is able to play a memory media created in the difference data delivery server 3 and read the difference data file Df stored in it. Note that the difference data file accepting means 13, when receiving the difference data file Df from the difference data delivery server 3 through the communication means 11 or reading the difference data file Df from the memory media by the media play means 12, accepts only newer version of the difference data file Df than the version of the road network data Rn stored in the local storage database 15.

The difference data file Df is a file that gathers the content of data that should be updated based on the actual state of road or facility as a difference data against the content of the data stored in the referential database 19 of the navigation apparatus 1. To be hereinafter described, the difference data file Df is generated at the difference data generation server 2 on the basis of new data and a comparative local storage database 33 that carries the same content as the local storage database 15 in the navigation apparatus 1.

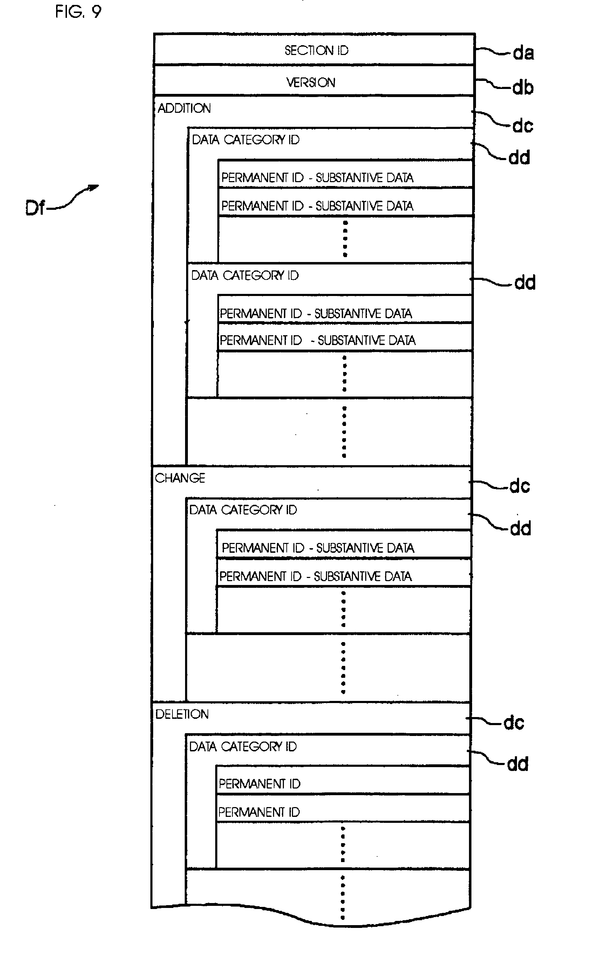

FIG.9 is a diagram showing an exemplary difference data file Df. In the present embodiment, the difference data file Df is created for each of the sections in the road network data Rn and the route pre-calculation data Pr (see FIG.3, FIG.4, and FIG.8), and section ID data da indicating the corresponding section is located on the top. The difference data file Df also includes version data db representing an update version. Subsequently the difference data file Df sorts the target data for update on the basis of the update mode. Thus, on the top of each data sorted on the basis of the update mode, update mode data dc indicating each mode "addition" "change" of "deletion" is located. Further, the difference data file Df arrays each of the data sorted on the basis of the update mode in the order of the data category. Therefore, on the top of each data sorted on the basis of the data category, data category ID data dd indicating the data category for the data is located. Subsequently the data category ID data dd is located followed by permanent ID data and substantive data associated with it for each of the data. Note that regarding the data which update mode is "deletion", new substantive data is not necessary; therefore only the permanent ID data is included. The permanent ID is a unique ID which is assigned to each of the substantive data included in the road network data Rn or the route pre-calculation data Pr on a specific map database. And it is also used in the referential database 19 and the local storage database 15 in common.

The data constructing the difference data file Df mainly includes various data such as data for the road network data Rn, data for the route pre-calculation data Pr, and data for a display, guidance, a search, and so forth (data for guidance). More specifically, the data category for network system data which is main data for the road network data Rn includes "intersection data" "connection data" "road data" "shape data" and so forth. And additional data which is related to these network system data for the road network data Rn includes the road extension data and the intersection extension data. The data category for the road extension data includes e.g., "road name data" or "traffic information related data" to associate the traffic information such as VICS (Vehicle Information and Communication System) with the road data. The data category for the intersection extension data includes e.g., "intersection name data" or "intersection guidance data" that represents the permanent ID data of the guidance data including the information such as that guidance is necessary or not in the intersection, if yes, its guidance content, and so forth. As described above, in the present embodiment, an arrangement is made wherein the various data for the road network data Rn is categorized on the basis of each of the element categories such as "intersection data", "connection data", "road data", "shape data", "road name data", "traffic information related data", "intersection name data", or "intersection guidance data", and the data under each element category is arrayed in the order of the data category. Note that the difference data file Df is explained herein, however, the description above may also apply to the road network data Rn stored in the local storage database 15. In addition, the route pre-calculation data Pr falls into one data category "route pre-calculation data". A data category ID is assigned to each of the data categories and is placed in the difference data file Df as data category ID data dd.

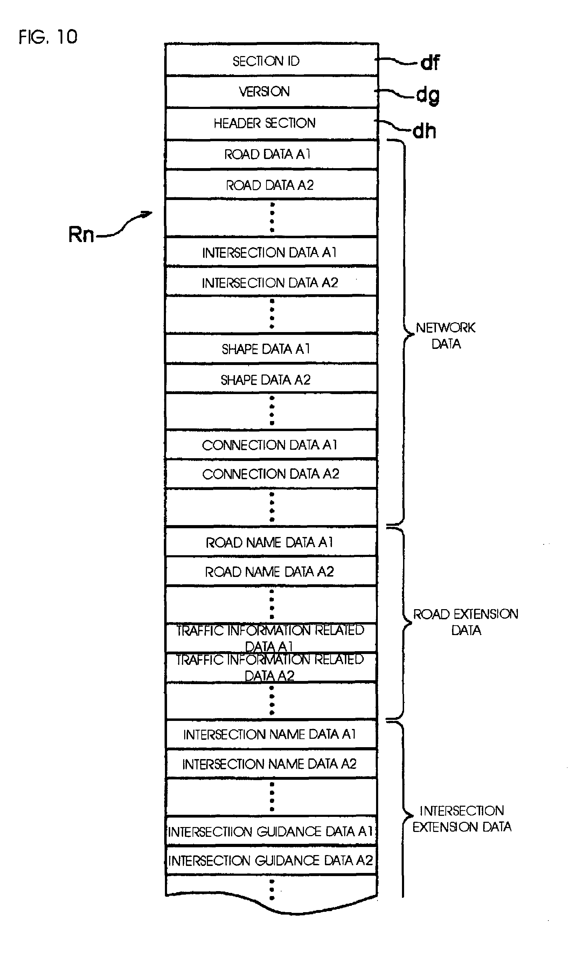

As shown in FIG.1, the local storage database 15 is the database for the differential update of the navigation map data such as the road network data Rn, the route pre-calculation data Pr, and so forth. Thus, the data stored in the local storage database 15 is constructed in the update data format which is different from the referential data format stored in the referential database 19. FIG.10 is a diagram showing an exemplary road network data Rn in the update data format. As shown in the diagram, the update data format is the data format wherein each of the data is arrayed in the order of the data category. In the present embodiment, as in the case of the referential database 19, the road network data Rn in the local storage database 15 is sorted by each section and the section ID data df indicating the corresponding section is located on the top. In addition, the road network data Rn includes version data dg representing the update version. Further, the road network data Rn includes a header section dh that stores address data representing the arrangement of the substantive data included in the road network data Rn. The header section dh is arrayed followed by the substantive data which is arrayed in the order of the data category.

The road network data Rn stored in the local storage database 15 in the update data format as well as the difference data file Df includes "intersection data", "connection data", "road data", "shape data" and so forth regarding the network system data as its data category, and "road name data", "traffic information related data" and so forth are included regarding the road extension data, and further "intersection name data", "intersection guidance data" and so forth are included regarding the intersection extension data. Each of the data is arrayed in the order of the data category and the data in the same data category is arrayed consecutively. More specifically, as shown in FIG 10, all the road data is arrayed consecutively starting with the road data A1 from the top, the road data A2 and so forth, and after that, all the intersection data is arrayed consecutively starting with the intersection data A1, then the intersection data A2 and so forth, and subsequently all the data for all the other data categories is arrayed in like wise. The header section dh stores the address data indicating the data alignment region of each of the data category and the each of the data array in the same data category. Accordingly, the local storage database update means 14, by referring to the information stored in the header dh, may obtain the information of each of the data alignment in the local storage database 15.

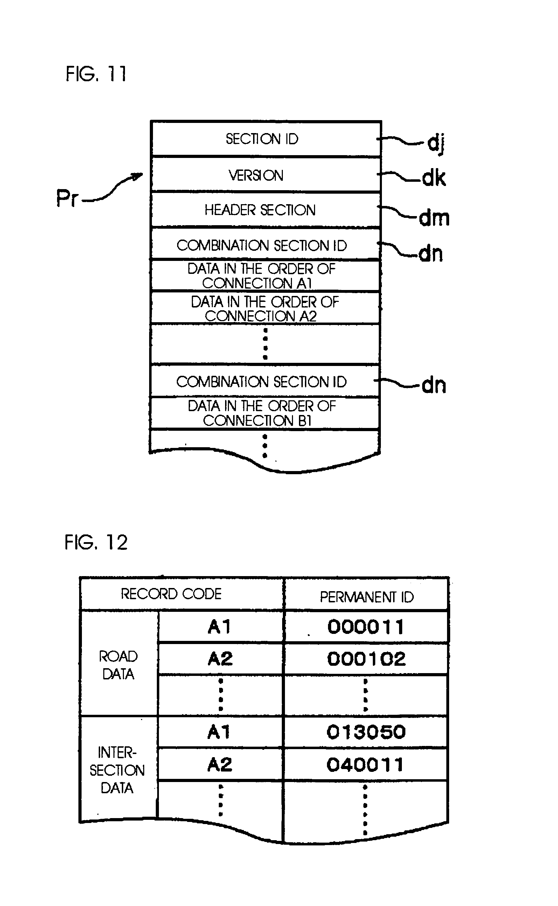

The local storage database 15 also stores the route pre-calculation data Pr. FIG.11 is a diagram showing an exemplary route pre-calculation data Pr stored in the local storage database 15. In the present embodiment, the route pre-calculation data Pr is stored in an independent format from the road network data Rn, and suchlike format is the update data format for the route pre-calculation data Pr. The route pre-calculation data Pr is the data sorted by each section in the layer 2, and the section ID data dj indicating the corresponding section in the layer 2 is placed on the top. Herein, the route pre-calculation data Pr corresponding to one section is a group of the route pre-calculation data Pr between the section and all the other nonadjacent sections in the layer 2 as well as the case of the route pre-calculation data Pr stored in the route calculation program database 19a. In addition, the route pre-calculation data Pr includes version data dk which represents the update version. Further, the route pre-calculation data Pr includes the header section dm that stores the address data representing the substantive data alignments that constructs the route pre-calculation data Pr. Then the header section dm is followed by the substantive data. The substantive data herein is sorted by the combination of the section in the layer 2 represented with the section ID data dj and the other section and aligned in order. That is to say, the substantive data includes the data which is the section ID data dj representing a section in the layer 2 and combination section ID data dn representing the section ID for the other section and the data in the order of connection A1, A2, and so forth that represent the order of the connection of the nodes and the links (see FIG.5) included in the route between these two sections (the section represented with the section ID data dj and the other section represented with the combination section ID data dn). Note that each of the data in the order of connection is the data representing one route. Further, various data (guidance data) such as image data, audio data, POI (Point of Interest) data and so forth are stored in the local storage database 15 in the order of the data category (Not illustrated).

As shown in FIG.12, the local storage database 15 stores a comparative table with a record code and a permanent ID for each of the data included in the navigation map data such as the road network data Rn and the route pre-calculation data Pr. With this comparative table, the permanent ID data and its associated substantive data stored in the difference data file Df is able to be associated with each of the data stored in the local storage database 15, and each of the data in the local storage database 15 may be updated on the basis of the difference data file Df accordingly. Note that the local storage database 15 is different from the referential database 19. The local storage database 15 is not sorted by an application program but is a one database.

The local storage database update means 14 is a means for updating the content of the local storage database 15 on the basis of the data included in the difference data file Df. As described above, the difference data file Df includes the section ID data da (see FIG.9). The section ID data df and dj (See FIG.10 and FIG.11) are assigned to the road network data Rn and the route pre-calculation data Pr in the local storage database 15. Accordingly, the local storage database update means 14 performs the update of the road network data Rn and the route pre-calculation data Pr on the basis of each section with the difference data file Df whom the section ID data da, df, and dj match. The method for the update may vary according to the update mode for updating the target data stored in the difference data file Df, e.g., "addition", "change", or "deletion"

When the update mode is "addition", the local storage database update means 14 adds the target data for the update to the region where the data sorted by the data category is stored corresponding to the data category ID dd in the difference data file Df in the road network data Rn or the route pre-calculation data Pr. Then, the information indicating the added data array will be added to the address data in the header unit dh and dm (see FIG.10 and FIG.11). In addition, the local storage database update means 14 updates the comparative table and adds the information of the record code and the permanent ID of the added data. When the update mode is "change", the local storage database update means 14, on the basis of the comparative table shown in FIG. 12, obtains the information of the record code for the corresponding data on the basis of the permanent ID of the target data for the update stored in the difference data file Df 7 first. Then, in reference to the address data in the header unit dh and dm in the road network data Rn and the route pre-calculation data Pr stored in the local storage database 15, the information of the position where the target data for update is stored is obtained and the target data for update is rewritten. When the update mode is "deletion", the local storage database update means 14, on the basis of the comparative table shown in the FIG.12, obtains the information of the record code for the corresponding data on the basis of the permanent ID of the target data for update stored in the difference data file Df 7 first. Then, in reference to the address data in the header unit dh and dm in the road network data Rn and the route pre-calculation data Pr stored in the local storage database 15, the information of the position where the target data for the update is stored is obtained and the target data for update and its address data is deleted. In addition, the local storage database update means 14 updates the comparative table and deletes the information of the record code and the permanent ID for the deleted data.

When the local storage database update means 14 updates the local storage database 15 with the difference data file Df, the local storage database update means 14 updates the version data dg in the road network data Rn (see FIG.10) and the version data Dk in the route pre-calculation data Pr (see FIG.11) corresponding to the updated section in the local storage database 15 so as to be the same version as the version data db in the difference data file Df (see FIG.9).

The priority determination means 16 is a means for, after updating the local storage database 15, determining the conversion priority on a plurality of the road network data Rn and the route pre-calculation data Pr sorted by each of the sections stored in the local storage database 15 according to the operation state of each of the application programs PG1, PG2, PG3, PG4, or PG5 in the navigation program PG. In the present embodiment, a plurality of the road network data Rn and the route pre-calculation data Pr sorted by each of the sections is corresponsive to "a plurality of grouped data". Subsequently, in the present embodiment, the priority determination means 16 determines each of the conversion priorities on a plurality of the road network data Rn and the route pre-calculation data Pr sorted by each of the sections either one of the three levels "high", "middle", or "low".

In the case a guidance route is set on the basis of the operation program, the priority determination means 16 makes the conversion priority on the data corresponding to the guidance route higher than the other data. More specifically, in the case a guidance route is set, the priority determination means 16 makes the conversion priority "high" on the road network data Rn corresponding to all the sections including the set guidance route in each of the layers 1, 2, and 3. In addition, the priority determination means 16 makes the conversion priority "high" on the route pre-calculation data Pr between the section including the departing point of the route in the layer 2 (i.e., the departing area) and the section including the destination of the route in the layer 2 (i.e., the destination area). Next, the conversion priority on the road network data Rn corresponding to the section which is adjacent to the section with "high" conversion priority is determined as "middle". Further, the conversion priority on the route pre-calculation data Pr between the departing area and the sections other than the destination area, and the conversion priority on the route pre-calculation data Pr between the destination area and the sections other than the departing area is determines as "middle". Finally, the conversion priority on the rest of the road network data Rn and the route pre-calculation data Pr is determines as "low".

On the other hand, in the case a guidance route is not set on the basis of the operation program, the priority determination means 16 makes the conversion priority on the data required for the peripheral guidance of the current position higher than the other data. More specifically, in the case a guidance route is not set, the priority determination means 16 makes the conversion priority "high" on the road network data Rn corresponding to the sections in each layer 1, 2, and 3 where the current position exists. Next, the conversation priority on the road network data Rn corresponding to the section which is adjacent to the section with "high" conversion priority is determined as "middle". Further, the conversion priority on the route pre-calculation data Pr between the section in the layer 2 where the current position exists and all the other sections is determines as "middle". Finally, the conversion priority on the rest of the road network data Rn and the route pre-calculation data Pr is determined as "low".

The conversion means 17 converts the data format of the road network data Rn and the route pre-calculation data Pr stored in the local storage database 15 from the update format to the referential data format on the basis of the conversion priority determined by the priority determination means 16. More specifically, the conversion means 17 converts the data format of the road network data Rn and the route pre-calculation data Pr with "high" conversion priority first, and next, converts the data format likewise with "middle" conversion priority and followed by with "low" conversion priority. Regarding the road network data Rn, the conversion means 17 converts the data arrayed in the order of the data category in the update data format as shown in FIG.10 to the data arrayed in the order of the connection of the road network in the referential data format as shown In FIG.6. Further, regarding the route pre-calculation data Pr, the conversion means 17 converts the update data format which is independent from the road network data Rn as shown in FIG. 11 to the referential data format which is associated with the road network data Rn.

As described above, the referential database 19 is sorted into a plurality of application program database 19a, 19b, 19c, 19d, and 19e, and the road network data Rn in the referential data format in accordance with each application program PG1, PG2, PG3, PG4, and PG5 is stored in each of the application program database 19a, 19b, 19c, 19d, and 19e. In the present embodiment, an arrangement is made wherein the conversion means 17 is able to convert a piece of road network data Rn stored in the local storage database 15 in the update data format and generate the road network data Rn with a plurality types of the referential data format in accordance with each application program PG1, PG2, PG3, PG4, and PG5. In addition, the road network data Rn is the data sorted by each predetermined section in each of the application database 19a, 19b, 19c, 19d, and 19e. Therefore, the conversion means 17 performs the conversion processing of the road network data Rn from the update data format to the referential data format on the basis of each predetermined section.

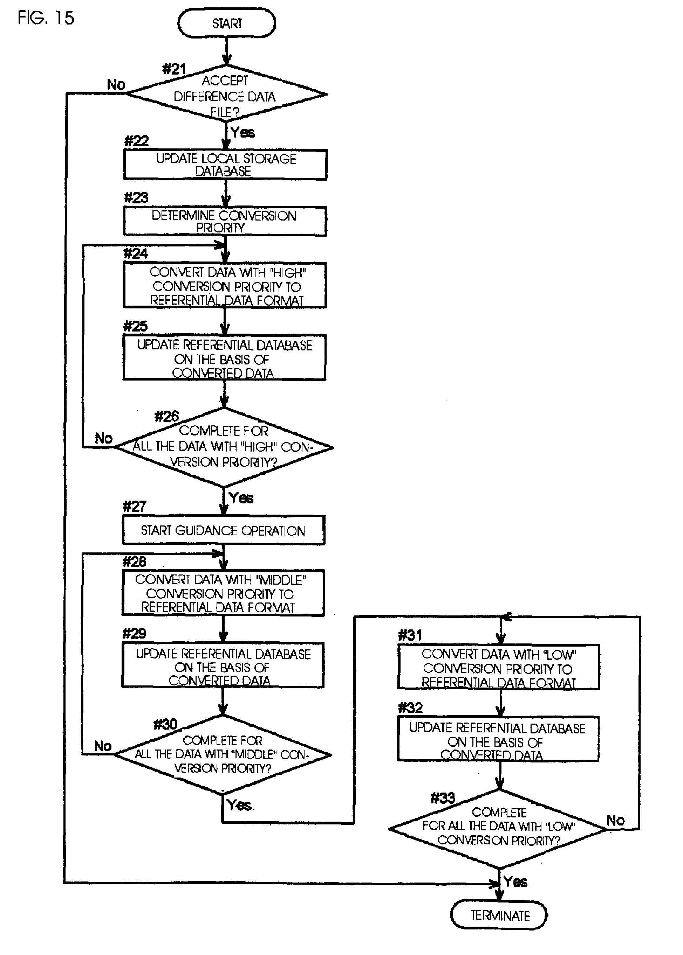

The referential database update means 18 updates the referential database 19 on the basis of the road network data Rn and the route pre-calculation data Pr converted by the conversion means 17. The referential database update means 18 performs the processing of updating the referential database 19 on the basis of the data converted in the order of the conversion, i.e., in the order of the conversion priority by the conversion means 17. It takes a lot of time to complete the conversion processing on all the data in the local storage database 15 by the conversion means 17, subsequently it takes a lot of time to complete all the update on the data in the referential database 19. Therefore, in the present embodiment, the referential database update means 18 updates the referential database 19 with the data having higher conversion priority than the predetermined level, i.e., the data with "high" conversion priority preferentially after the conversion processing by the conversion means 17. Accordingly, the referential database 19 with the data having high conversion priority may be updated in short period of time and the new updated information may be provided to a user quickly. As for the data with lower conversion priority, i.e., the data with "middle" and "low" conversion priority in the present embodiment, there may be no possibility to be referred by the navigation program Pg unless the destination is changed or the like, the referential database update means 18 updates the referential database 19 in parallel with the guidance operation on the basis of the navigation program PG. The operation processing in the navigation apparatus 1 by the referential database update means 18 as described above will be explained in detail hereinafter with reference to a flowchart shown in FIG.15. More specifically, while the conversion means 17 converts the road network data Rn and the route pre-calculation data Pr to the referential data format corresponding to each application program PG1, PG2, PG3, PG4, and PG5, the referential database update means 18 updates the referential database 19 by replacing with the corresponding data on the section basis each time of the conversion.

3. A structure of the difference data generation server 2
The difference data generation server 2 is a server apparatus for generating the difference data file Df and providing it to the difference data delivery server 3. In order to execute the aforementioned processing, the difference data generation server 2 comprises an input terminal 31 serving as a new data accepting means, a data category judging means (not illustrated), a comparative local storage database 33, a new local storage database 34, a new local storage database generation means 35, and a difference data file generation means 36.

The input terminal 31 is the terminal for accepting the input of the new data. The new data inputted herein is concrete data with the newly added, changed, or deleted content for the road network data Rn or the guidance data stored in the referential database 19 in the navigation apparatus 1. For example, when a new road is actually built, the intersection data, the connection data, the road data, the shape data, and so forth constructing the part of the road network data Rn for the new road, and various image data, the audio data, POI data, and so forth constructing the guidance data required due to the newly built road is inputted from the input terminal 31 as new data. Further, when a road is removed, for example, the information is inputted which specifies various data or guidance data constructing the part of the road network data Rn that will be unnecessary due to the removal of the road. As information for specifying such data, a permanent ID or the like for each of the data may be used, for example. The input terminal 31 may be, e.g., a personal computer with a keyboard, a mouse, a monitor and so forth.

The comparative local storage database 33 is the database including the same content as the local storage database 15 in the navigation apparatus 1. That is to say, the comparative local storage database 33 stores the navigation map data such as the road network data Rn and the route pre-calculation data Pr in the update data format on the predetermined section basis as shown in FIG.10 and FIG. 11, for example. In addition, the comparative local storage database 33, as well as the local storage database 15, stores the comparative table with the record code and the permanent ID for each of the data of the road network data Rn and the route pre-calculation data Pr as shown in FIG.12. The content of the comparative local storage database 33, by being updated so as to mach the content of the new local storage database 34 after generating the difference data file Df, always keeps the same content as the local storage database 15 in the navigation apparatus 1 being updated by the difference data file Df. However, in the present embodiment as described hereinafter, the local storage database 34 stores only the road network data Rn corresponding to the section/sections updated by the new data and the route pre-calculation data Pr which was changed based on it. Thus, when updating the road network data Rn stored in the comparative local storage database 33, only the road network data Rn and the route pre-calculation data Pr stored in the new local storage database 34 is updated. Further, when updating the comparative local storage database 33, the update is performed in order for the version data dg and dk of the updated road network data Rn and the route pre-calculation data Pr (see FIG. 10 and FIG.11) to be the same version as the version data db of the generated difference data file Df (see FIG.9).

The new local storage database 34 has the same data format as the comparative local storage database 33 and includes the content that is updated with the content of the inputted new data by the input terminal 31. That is to say, the new local storage database 34, as well as the comparative local storage database 33, stores e.g., the navigation map data such as the road network data Rn and the route pre-calculation data Pr in the update data format as shown in FIG. 10 and FIG.11 and the comparative table with the record code and the permanent ID for each of the data of the road network data Rn and the route pre-calculation data Pr as shown in FIG. 12. However, as described hereinafter, the new local storage database generation means 35 updates the road network data Rn and the route pre-calculation data Pr and stores the road network data Rn and the route pre-calculation data Pr into the local storage database 34 on the predetermined section basis. Thus, the new local storage database 34 stores the road network data Rn and the route pre-calculation data Pr corresponding to the updated section/sections, and do not store the data corresponding to the non-updated section/sections. Further, as for the content of the comparative table, the updated part based on the content of the new data is different from the content of the comparative local storage database 33.

The new local storage database generation means 35 is a means for generating the new local storage database 34 on the basis of the comparative local storage database 33 and the new data inputted through the input terminal 31. More specifically, the new local storage database generation means 35 converts the data inputted through the input terminal 31 corresponding to the part of the road network data Rn that should be added, changed, or deleted into the update data format which is the same as the comparative local storage database 33. The new local storage database generation means 35 reads the road network data Rn corresponding to the target section for the update from the comparative local storage database 33 and then performs adding, changing, or deleting to update its content of the road network data Rn on the basis of the converted data. Subsequently, the updated road network data Rn corresponding to the section will be stored in the new local storage database 34. In addition, the new local storage database generation means 35, on the basis of the updated road network data Rn of each section, recalculates the route pre-calculation data Pr that is possibly changed due to the update of the road network data Rn. Then, the updated route pre-calculation data Pr as the result of the calculation will be stored in the new local storage database 34 on the section basis. Note that the recalculation is performed on the route pre-calculation data Pr which has at least one section of the combined section among the sections in the layer 2 that the road network data Rn was updated. Then the result of the calculation will be the updated route pre-calculation data Pr. Further, in response to above, the new local storage database generation means 35 also updates the content of the comparative table (see FIG.7) by adding, changing, or deleting. Then the updated comparative table will be stored in the new local storage database 34.

When a new road is actually built, for example, the intersection data, the connection data, the road data, the shape data, and so forth that constructs the part of the road network data Rn for the new road is inputted through the input terminal 31. Then, the new local storage database generation means 35 converts the data format of the data to the update data format, reads the existing road network data Rn corresponding to the target section for update from the comparative local storage database 33 on the basis of the information of the coordinate, the connection data, and so forth for each of the data, and adds the data corresponding to the new road to the existing road network data Rn. In this case, the new local storage database generation means 35 also performs necessary changes on any related data among the data constructing the existing road network data Rn. In addition, the new local storage database generation means 35 recalculates the route pre-calculation data Pr which will be possibly changed due to the update of the road network data Rn as described above. Then the data format of the updated route pre-calculation data Pr as the result of the calculation will be converted to the update data format and the data will be stored in the new local storage database 34 on the section basis. Further, the new local storage database generation means 35 also assigns the new permanent ID for the newly added data and adds the new permanent ID to the comparative table (see FIG.7). On the other hand, when a road is removed, for example, the information is inputted which specifies various data constructing the part of the road network data Rn that will be unnecessary due to the removal of the road through the input terminal 31. Then, the new local storage database generation means 35 reads the existing road network data Rn corresponding to the target section for the update from the comparative local storage database 33, deletes the data constructing the part of the road network data Rn which will be unnecessary from the existing road network data Rn, and performs necessary changes for the related data at the same time. In addition, the new local storage database generation means 35 recalculates the route pre-calculation data Pr which will be possibly changed due to the update of the road network data Rn as described above. Then the data format of the updated route pre-calculation data Pr as the result of the calculation will be converted to the update data format and the data will be stored in the new local storage database 34 on the section basis. Further, the new local storage database generation means 35 also deletes the new permanent ID for the deleted data from the comparative table (see FIG.7).

The difference data file generation means 36 is a means for generating the difference data file Df on the basis of the difference between the comparative local storage database 33 and the new local storage database 34. As described above, the comparative local storage database 33 is the database including the same content as the local storage database 15 in the navigation apparatus 1. The new local storage database 34 is the database having the same data format as the comparative local storage database 33 and includes the content which was updated with the content of the inputted new data through the input terminal 31. Accordingly, by comparing the content of foregoing two databases and extracting the difference, the data corresponding to the road network data Rn and the route pre-calculation data Pr that constructs the content of the difference data file Df may be obtained. Then, the difference data file generation means 36 arranges the data regarding the road network data Rn and the route pre-calculation data Pr that was obtained as the difference between the comparative local storage database 33 and the new local storage database 34, and generates the difference data file Df by arranging to a predetermined data format for the difference data file Df. Note that the difference data file Df is generated on the predetermined section basis in response to the road network data Rn and the route pre-calculation data Pr corresponding to the updated section/sections stored in the new local storage database 34.

The specific content of the difference data file Df was already explained and any further detail description will not be give, however, in the present embodiment as shown in FIG.9, the difference data file Df aligns each data in the order of the data category including the section ID data da and the version data db followed by the update mode such as "addition", "change", or "deletion". The section ID data da is the data indicating the section of the road network data Rn and the route pre-calculation data Pr which is the target for update by the difference data file Df and showing the road network data Rn and one or both sections of the route pre-calculation data Pr which was fundamental to generate the difference data file Df. The difference data file generation means 36 counts how many times the difference data file Df has been generated in the past and stores the number in a version data storage means (not illustrated), then assigns a serial number or the like as the version data db depending on the number of the generation. Note that, in the present embodiment, the number of the generation of the difference data file Df is counted on the section basis in response to the section/sections of the road network data Rn and the route pre-calculation data Pr, and the serial number or the like on the section basis becomes the version data db. The permanent ID associated with each of the substantive data is assigned on the basis of the comparative table stored in the new local storage database 34 (see FIG.12). The update mode data dc representing the update mode or the data category ID data dd is assigned on the basis of the table (not illustrated) included in the difference data file generation means 36. Subsequently, the difference data file Df generated by the difference data file generation means 36 will be transmitted to the difference data delivery server 3 and stored in a difference database 41.

4. A structure of the difference data delivery server 3
The difference data delivery server 3 is a server apparatus for providing the difference data file Df generated at the difference data generation server 2 to the navigation apparatus 1. In order to execute the foregoing processing, the difference data delivery server 3 includes the difference database 41 and a delivery means 42 and a media creation means 43 severing as a difference data file output means 44 for outputting the difference data file Df to be provided to the navigation apparatus 1.

The difference database 41 is a database for storing the difference data file Df generated at the difference data generation server 2. This difference database 41 stores all the difference data file Df that has been generated in the past at the difference data generation server 2. That is to say, the difference database 41 stores equal to or more than one or two versions of difference data file Df on the section basis in response to the road network data Rn and the route pre-calculation data Pr.

The delivery means 42 is a means for delivering the difference data file Df to the navigation apparatus 1. In the present embodiment, the delivery means 42 is able to deliver the difference data file Df to the navigation apparatus 1 via the wireless base station 4 or the communication network 6 and the terminal for update 5. The media creation means 43 is able to put the difference data file Df stored in the difference database 41 into the memory media Me on the basis of the directions from an operation means (not illustrated) in the difference data delivery server 3. The method for providing the difference data file Df by the difference data delivery server 3 will explained hereinafter in detail with reference to a flowchart.

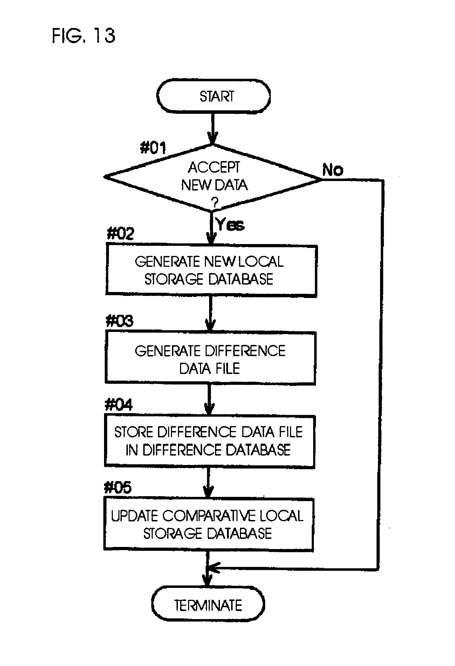

5. The method for generating the difference data file.
Next, the method for generating the difference data file Df by the difference data generation server 2 will be explained on the basis of the flowchart shown in FIG.13. In the difference data generation server 2, when accepting the input of new data through the input terminal 31 (step#01:Yes), the new local storage database generation means 35 generates the new local storage database 34 on the basis of the accepted data and the comparative local storage database 33 (step#02) first. Next, the difference data file generation means 36 generates the difference data file Df on the basis of the difference between the comparative local storage database 33 and the new local storage database 34 (step#3). Then, the generated difference data file Df is transmitted to the difference data delivery server 3 and stored in the difference database 41 (step#4). Thereafter, the content of the comparative local storage database 33 is updated to match the content of the new local storage database 34 (step#5). With all the foregoing processes, the processing for generating the difference data file Df by the difference data generation server 2 will be terminated.

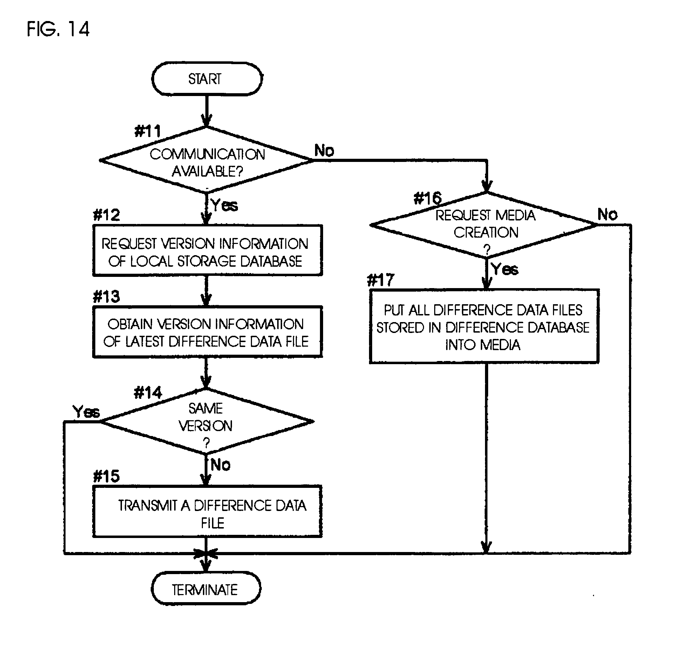

6. The method for providing the difference data file.
Next, the method for providing the difference data file Df to the navigation apparatus 1 by the difference data delivery server 3 will be explained on the basis of the flowchart shown in the FIG.14. In the difference data delivery server 3, the delivery means 42 determines whether any communication is available with the navigation apparatus 1 (step#11). Note that the delivery means 42, as described above, communicates with the navigation apparatus 1 via the wireless base station 4 or the communication network 6 and the terminal for update 5. If any communication is available with the navigation apparatus 1 (step#11:Yes), the delivery means 42 then requires the information of the version of the road network data Rn and the route pre-calculation data Pr stored in the local storage database 15 to the navigation apparatus 1(step#12). In that case, the navigation apparatus 1 reads each of the version data dg and dk for the road network data Rn and the route pre-calculation data Pr stored on the section basis in the local storage database 15 (see FIG. 10 and FIG.11), and then transmits it to the difference data delivery server 3 as the information of the version of the road network data Rn and the route pre-calculation data Pr on the section basis.

Meanwhile, the delivery means 42 obtains the information of the latest version of the difference data file Df for each of the sections on the basis of the version data db of each of the difference data file Df stored in the difference database 41 (step#13). Then, the delivery means 42 compares the information of the latest version of the difference data file Df for each section obtained through the step# 13 to the information of the version of the road network data Rn and the route pre-calculation data Pr on the section basis received from the navigation apparatus 1, then determines whether the version is the same or not (step#14). In this case, the version comparison is made with the difference data file Df and the road network data Rn and the route pre-calculation data Pr with the same section ID data da, df, and dj (see FIG.9, FIG. 10, and FIG.11) on the section basis. If the version is not the same (step#14:No), that is to say, the latest version of the difference data file Df for the same section is newer than the version of the road network data Rn and the route pre-calculation data Pr in the navigation apparatus 1, all the difference data file Df which is newer than the version of the road network data Rn and the route pre-calculation data Pr will be transmitted to the navigation apparatus 1. On the other hand, if the version is the same (step#14:Yes), that is to say, the latest version of the difference data file Df for the same section is the same as the version of the road network data Rn and the route pre-calculation data Pr in the navigation apparatus 1, there is no need to update with the difference data file Df, and the processing will be terminated without transmitting the difference data file Df accordingly.

On the other hand, when no communication is available between the delivery means 42 and the navigation apparatus 1 (step#11:No), the difference data delivery server 3 determines whether a media creation is required or not from an operation means (not illustrated) in the difference data delivery server 3 (step#16). In the case that the media creation is required, the entire difference data file Df stored in the difference database is put into the memory media Me (step#17). The memory media Me created as above storing the difference data file Df will be sent to a user or a service provider who uses the navigation apparatus 1 by postal mail and so forth. With all the foregoing processes, the processing will be terminated.

7. The method for updating the referential database 19 in the navigation apparatus 1.
Next, the method for updating the referential database 19 in the navigation apparatus 1 will be explained with reference to the flowchart shown in FIG.15. When the difference data file accepting means 13 accepts the difference data file Df(step#21:Yes), the navigation apparatus 1 transmits the data of the difference data file Df being accepted to the local storage database update means 14 first, and the local storage database update means 14 updates the data such as the road network data Rn and the route pre-calculation data Pr stored in the local storage database 15 (step#22).

Next, in the navigation apparatus 1, the priority determination means 16 determines the conversion priority on the plurality of the road network data Rn and the route pre-calculation data Pr that are sorted by section and stored in the local storage database 15 after updated at the step# 22 according to the operation state of the navigation program PG (step#23). In the present embodiment, as described above, the priority determination means 16 determines the conversion priority on the plurality of the road network data Rn and the route pre-calculation data Pr that are sorted by section either one of three levels "high", "middle", or "low" according to the operation state of each of the application programs PG1, PG2, PG3, PG4, and PG5. Note that as the determination criteria on the conversion priority were already explained, no further explanation will be given herein. Next, the conversion means 18 converts the data having conversion priority higher than the predetermined level, i.e., the road network data Rn and the route pre-calculation data Pr with "high" conversion priority in the present embodiment to the referential data format (step#24). Thereafter, the referential database 19 is updated on the basis of the data converted at the step# 24 (step#25). Then, the conversion processing (step#24) and the update processing on the referential database 19 (step#25) will be repeated until all the data with "high" conversion priority is completed (step#26:No). After completing the conversion processing (step#24) and the update processing on the referential database 19 (step#25) for all the data with "high" conversion priority (step#26:Yes), the navigation computing means 20 starts the guidance operation on the basis of the navigation program PG (step#27). Note that the guidance operation described above includes all the operations regarding guidance operation in navigation apparatus such as a display of current position, a route calculation from a departing point to a destination, a course guidance to a destination, a destination search, and so forth.

More specifically, when a guidance route is set on the basis of the navigation program PG, after completing the conversion processing of the data having the conversion priority "high" (step#24) and the update processing on the referential database 19 (step#25) (step#26:Yes), the route calculation will be performed once again and the course guidance to the destination or the display of the current position on the basis of the updated new data will be performed (step#27). On the other hand, when a guidance route is not set on the basis of the navigation program PG, after completing the conversion processing of the data having conversion priority "high" (step#24) and the update processing on the referential database 19 (step#25) (step#26:Yes), the display of the current position including the map display around the current position will be performed, for example (step#27). After starting the guidance operation in the either case, a destination search, a new destination setting, or other will be available.

Thereafter, in parallel with the foregoing guidance operation, the conversion means 17 converts the road network data Rn and the route pre-calculation data Pr having conversion priority "middle" to the referential data format (step#28). Then, the referential database 19 is updated with the data converted at the step# 28 (step#29). The conversion processing (step#28) and the update processing on the referential database 19 (step#29) will be repeated until the processing for all the data having conversion priority "middle" is completed (step#30:No). Thereafter, after completing the conversion processing for all the data with "middle" (step#28) and the update processing on the referential database 19 (step"29) (step#30:Yes), the conversion means 17 converts the road network data Rn and the route re-calculation data Pr having conversion priority "low" to the referential data format (step#31). Thereafter, the referential database 19 is updated with the data converted at the step# 31 (step#32). The conversion processing (step#31) and the update processing on the referential database 19 (step#32) will be repeated until the processing for all the data having conversion priority "low" is completed (step#33:No). With the foregoing processes, the entire referential database 19 is eventually updated. With all that, the processing is terminated.

(Other modified embodiments)(1) As each of the structures of the road network data Rn and the difference data file Df in the referential data format, the update data format, and so forth described above are just the exemplifications, other arrangements may be definitely made to have a different data structure from the structures in the embodiment described above.

(2) In the embodiment described above, the local storage database 15 is updated on the basis of the difference data file Df and then the referential database 19 is updated on the basis of the local storage database 15 regarding both the road network data Rn and the route pre-calculation data Pr. However, the present invention is not limited to the details of the embodiments described above and various modifications are possible. For example, it may be one of the preferred embodiments of the present invention that the local storage database 15 is updated on the basis of the difference data file Df regarding only either the road network data Rn or the route pre-calculation data Pr, and then the referential database 19 is updated on the basis of the local storage database 15.

(3) In the embodiment described above, the priority determination means 16 determines the conversion priority with one of three levels "high", "middle", or "low". However, various modifications may be possible for the determination of the conversion priority by the priority determination means 16. For example, it may be one of the preferred embodiments of the present invention that the priority determination means 16 determines the conversion priority with either one of four levels or more, or of two levels. In addition, each of the plurality of the grouped data stored in the local storage database 15 may possibly have the different conversion priority.

(4) In the embodiment described above, each of the plurality of the road network data Rn and the route pre-calculation data Pr sorted by section is considered as "the plurality of the grouped data", and the priority determination means 16 determines the conversion priority on the basis of the data sorted by section as the smallest unit. However, the data unit for determining the priority by the priority determination means 16 is not limited to the data sorted by section as above. Various modifications may be possible, for example, wherein the priority determination means 16 determines the conversion priority on the basis of the road network data Rn and the route pre-calculation data Pr sorted by a predetermined area constructed with a plurality of sections as the smallest unit, or the conversion priority may be determined on the basis of a smaller region than a section as the smallest unit.

(5) In the embodiment described above, when a guidance route is set, the conversion means 17 makes the conversion priority on the data regarding the set guidance route higher than the other data. When a guidance route is not set, the conversion means 17 makes the conversion priority on the data being required for the peripheral guidance of the current position higher than the other data. However, the foregoing determination criteria on the conversion priority are just the exemplifications, and the determination based on other criteria may be also possible accordingly. Note that, even with some other criteria, it is still preferred to make the conversion priority on the data which has great possibility to be used for a user such as the date corresponding to the guidance operation on the basis of the operation of navigation program PG higher. With suchlike processing above, the new updated information may be provided to a user promptly.

(6) In the embodiment described above, the referential database update means 18 performs the update processing on the referential database 19 on the basis of the data converted in the order of conversion by the conversion means 17, i.e., in the order of the conversion priority. However, the order for updating the data is not limited to the exemplification above. The referential database 19 may be updated in a different order from the foregoing order based on the conversion priority. For example, the data converted in the order of the conversion priority may temporally be stored in a memory means and after all the data is converted, the referential database 19 may be updated. In that case, it is preferred that the converted data being stored in the above-mentioned memory means is referable by the operation program such as the navigation program PG and so forth.

(7) In the embodiment described above, the content of the comparative local storage database 33 in the difference data generation server 2 is updated to match the content of the new local storage database 34 after generating the difference data file Df. In this case, the content of the comparative local storage database 33 before the update may be deleted, however, it is one of the preferred embodiments to store the content as well as the version data in the comparative local storage database 33. In that case, the comparative local storage database 33 may store a plurality of versions of the road network data Rn and the route pre-calculation data Pr on the predetermined section basis.

(8) In the embodiment described above, the difference data generation server 2 generates the new local storage database 34 on the basis of the new data and then generates the difference data file Df on the basis of the difference between the comparative local storage database 33 and the new local storage database 34. However, the structure of the difference data generation server 2 is not limited to the exemplification above. For example, it is one of the preferred embodiments that the difference data generation server 2 may generate the difference data file Df on the basis of the new data and the comparative local storage database 33 without generating the new local storage database 34.

(9) In the embodiment described above, the difference data file Df is generated on the basis of at least the new data and the comparative local storage database 33 by means of the difference data generation server 2. However, the structure of the server apparatus of the present invention is not limited to the exemplification above. For example, the input terminal 31 or the like may input the data equivalent to the difference data file Df directly and stores it into the difference database 41. In that case, a server apparatus may comprise only a difference data accepting means in addition to a certain structure equivalent to the difference data delivery server 3 described in the embodiment above.

(10) In the embodiment described above, the structure of the server apparatus includes the difference data generation server 2 and the difference data delivery server 3. However, the structure of the server apparatus is not limited to the exemplification above. For example, it is one of the preferred embodiments to have one server apparatus with the function of the difference data generation server 2 and the function of the difference data delivery server 3.

(11) In the embodiment described above, the navigation program PG serving as an operation program includes a plurality of application programs PG1, PG2, PG3, PG4, and PG5, and the referential database 19 includes the application program database 19a, 19b, 19c, 19d, and 19e in accordance with each of the application program PG1, PG2, PG3, PG4, and PG5. However, the structure of the operation program and the referential database 19 is not limited to the exemplification above. Thus, the data stored in the referential database 19 may be constructed in one kind of the referential data format. In addition, the data stored in the referential database 19 may not have to be sorted into a plurality of databases. Further, the operation program may have no need to include a plurality of application programs.

(Industrial applicability)
The present invention is applicable to a data update system for, for example, updating a map database included in navigation apparatus being operated on the basis of a predetermined program.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus adapted to be operated on the basis of a predetermined operation program (PG) while accepting a difference data file (Df) for updating a database (15) from a server apparatus (2), comprising:
a local storage database (15) constructed in an update data format that is different from a referential data format to be referred by the operation program (PG), the local storage database (15) being adapted to be updated by the difference data file (Df);
a priority determination means (16) for, after updating the local storage database (15), determining a conversion priority on a plurality of grouped data stored in the local storage database (15) according to an operation state of the operation program (PG); and
a conversion means (17) for converting data stored in the local storage database (15) to the referential data format in the order of the conversion priority.

2. The navigation apparatus according to claim 1, wherein, when a guidance route is set on the basis of the operation program (PG), the priority determination means (16) makes the conversion priority on data concerning the guidance route higher than the other data.

3. The navigation apparatus according to claim 1 or 2, wherein, when a guidance route is not set on the basis of the operation program (PG), the priority determination means (16) makes the conversion priority on data required for peripheral guidance of a current position higher than the other data.

4. The navigation apparatus according to any one of claims 1 to 3, comprising a referential database (19) that stores data in a referential data format to be referred by the operation program (PG) and a referential database update means (18) for updating the referential database (19) on the basis of converted data by the conversion means (17).

5. The navigation apparatus according to claim 4, wherein the referential database update means (18) updates the referential database (19) preferentially on data having the conversion priority higher than a predetermined level after converted by the conversion means (17), and updates the referential database (19) on data having the conversion priority lower than the predetermined level in parallel with a guidance operation on the basis of the operation program (PG).

6. The navigation apparatus according to any one of claims 1 to 5, wherein data stored in the local storage database (15) includes road network data (Rn), the referential data format is a data format in which each of data constructing the road network data (Rn) is arrayed in the order of a connection of a road network, and the update data format is a data format in which each of data constructing the road network data (Rn) is arrayed in the order of a data category.

7. The navigation apparatus according to claim 6, wherein the difference data file (Df) includes data representing an update mode and road network data (Rn) corresponding to a target part for update, and road network data (Rn) corresponding to a target part for update is constructed in a data format in which data is arrayed in the order of a data category.

8. The navigation apparatus according to any one of claims 1 to 7, wherein data stored in the local storage database (15) includes road network data (Rn) and route pre-calculation data (Pr) as a result of a pre-calculation of plural combined routes between a departing area and a destination area, and the difference data file (Df) includes data representing an update mode, road network data (Rn) corresponding to a target part for update, and the route pre-calculation data (Pr) corresponding to a target part for update.

9. The navigation apparatus according to claim 8, wherein, regarding the route pre-calculation data (Pr), when a guidance route is set on the basis of the operation program (PG), the priority determination means (16) makes the conversion priority on data connecting the departing area and the destination area of the guidance route higher than the other data.

10. A data update system comprising:
a navigation apparatus (1) according to one of claims 1 to 9; and
a server apparatus (2, 3) for providing a difference data file (Df) for updating a database (15) of the navigation apparatus (1);
wherein the server apparatus includes a difference data file (Df) output means (3) for outputting the difference data file (Df) to be provided to the navigation apparatus (1).

11. The data update system according to claim 10, wherein the server apparatus (2) includes a comparative local storage database (33) having the same content as the local storage database (15), a new data accepting means for accepting an input of new data, and a difference data file (Df) generation means (35) for generating the difference data file (Df) on the basis of the comparative local storage database (33) and the new data.

12. The data update system according to claim 10 or 11, wherein the server apparatus (2) further includes a new local storage database generation means (35) for generating a new local storage database (34) having the same data format as the comparative local storage database (33) and being updated with the content of the new data on the basis of the comparative local storage database (33) and the new data, and the difference data file (Df) generation means (36) generates the difference data file (Df) on the basis of the difference between the comparative local storage database (33) and the new local storage database (34).

13. A data update method for updating a database by providing a difference data file (Df) from a server apparatus (2) to a navigation apparatus (1), the method uses:
the server apparatus (2); and
the navigation apparatus (1) that includes a local storage database (15) constructed in an update data format that is different from a referential data format to be referred by a predetermined operation program (PG); the method comprising the steps of
outputting the difference data file (Df) to be provided to the navigation apparatus (1) from the server apparatus (2);
accepting the difference data file (Df) by the navigation apparatus;
updating a local storage database (15) by the difference data file (Df);
determining, after updating the local storage database (15), a conversion priority for a plurality of grouped data stored in the local storage database (15) according to an operation state of the operation program (PG);
converting data stored in the local storage database (15) into the referential data format according to the conversion priority; and
making the converted data referable by the operation program (PG).

14. The data update method according to claim 13, comprising the step of making, when a guidance route is set on the basis of the operation program (PG), the conversion priority on data concerning the guidance route higher than the other data.

15. The data update method according to claim 13 or 14, comprising the step of making, when a guidance route is not set on the basis of the operation program (PG), the conversion priority on data required for peripheral guidance of a current position higher than the other data.

16. The data update method according to any one of claims 13 to 15, comprising the step of storing data in a referential data format to be referred by the operation program (PG) in a referential database of the navigation apparatus and updating the referential database (19) on the basis of the converted data to the referential data format.

17. The data update method according to claim 16, further comprising the step of updating the referential database (19) preferentially on data having the conversion priority higher than a predetermined level after converting the data to the referential data format and updating the referential database (19) on data having the conversion priority lower than a predetermined level in parallel with a guidance operation on the basis of the operation program (PG).

18. The data update method according to any one of claims 13 to 17, wherein data stored in the local storage database (15) includes road network data (Rn) and route pre-calculation data (Pr) as a result of a pre-calculation of plural combined routes between a departing area and a destination area, and regarding the route pre-calculation data (Pr), when a guidance route is set on the basis of the operation program (PG), and making the conversion priority on data connecting the departing area and the destination area of the guidance route higher than the other data.

19. The data update method according to any one of claims 13 to 18, wherein the server apparatus (2) includes a comparative local storage database (33) having the same content as the local storage database, comprising the steps of accepting an input of new data into the server apparatus (2), and generating the difference data file (Df) on the basis of the comparative local storage database (33) and the new data.

20. The data update method according to claim 19, comprising the step of generating a new local storage database (34) having the same data format as the comparative local storage database (15) of the navigation apparatus (1) and being updated with the content of the new data on the basis of the comparative local storage database (33) and the new data in the server apparatus, and generating the difference data file (Df) on the basis of the difference between the comparative local storage database (33) and the new local storage database (34).
